# EUROPÄISCHE PATENTANMELDUNG

(11) **EP 3 772 269 A1**
(43) Veröffentlichungstag der Anmeldung: **10.02.2021**
(21) Anmeldenummer: 20169638.2
(22) Anmeldetag: 15.04.2020
(51) Int. Cl.: A01D 41/127, A01B 79/00

(54) **VERFAHREN ZUR ERTRAGSKARTIERUNG**

(30) Priorität: 05.08.2019 DE 102019121052
(71) Anmelder: CLAAS Selbstfahrende Erntemaschinen GmbH, 33428 Harsewinkel (DE)
(72) Erfinder: Redenius, Jannik, 32361 Pr. Oldendorf (DE); Fischer, Frédéric, 59823 Arnsberg (DE); Skiba, Andreas, 33647 Bielefeld (DE); Middelberg, René, 49080 Osnabrück (DE); Johann to Büren, Gerald, 49205 Hasbergen (DE)
(74) Vertreter: CLAAS Gruppe

(57) **Zusammenfassung**

Die vorliegende Erfindung betrifft ein Verfahren zur Ertragskartierung, umfassend die Schritte
- Bestimmen einer von einer selbstfahrenden Erntemaschine (1, 10) aufgenommenen Erntegutmenge durch zumindest ein Messsystem (42, 48);
- Bestimmen von Ertragsdaten anhand der bestimmen aufgenommenen Erntegutmenge;
- georeferenzierte Abspeicherung der Ertragsdaten in einer Speichervorrichtung (68);
gekennzeichnet durch die folgenden Verfahrensschritte:
- vorausschauende sensorische Erfassung von Umfelddaten und sensorische Erfassung von zumindest einem Betriebsparameter der Erntemaschine (1, 10);
- Verarbeitung der Umfelddaten zur Bestimmung von Erntegutbestandsparametern;
- georeferenzierte Abspeicherung zumindest der Erntegutbestandsparametern in der Speichervorrichtung (68); und
- Verrechnen der georeferenzierten Ertragsdaten mit den georeferenzierten Erntegutbestandsparametern bezogen auf zumindest eine durch die Erntemaschine (1, 10) während des Erntevorgangs zurückgelegte Trajektorie (86) zur Erstellung einer Ertragskarte.

## Beschreibung

Die vorliegende Erfindung betrifft ein Verfahren zur Ertragskartierung gemäß dem Oberbegriff des Anspruches 1. Weiterhin hat die vorliegende Erfindung ein System zur Kartierung eines Ertrags einer selbstfahrenden Erntemaschine gemäß dem Oberbegriff des Anspruches 12 zum Gegenstand.

Ein Verfahren zur Ertragskartierung sowie ein System zur Kartierung eines Ertrags einer selbstfahrenden Erntemaschine sind aus der DE 103 06 725 A1 bekannt. Darin ist eine als Feldhäcksler ausgeführte selbstfahrende Erntemaschine beschrieben, welche eine von der Erntemaschine aufgenommenen Erntegutmenge durch ein Messsystem bestimmt. Zur Bestimmung der Erntegutmenge werden während der Be- und Verarbeitung des aufgenommenen Erntegutes durch die Erntemaschine Erntegutparameter sensorisch ermittelt, welche georeferenziert in einer Speichervorrichtung abgespeichert werden. Diese Daten können durch Verrechnung in eine Bestandskarte des betreffenden Feldes überführt werden, so dass nach der Ernte eine Ertragskarte vorliegt, welche als Grundlage zur Ableitung für nachgelagert durchzuführende Maßnahmen zur Ertragsverbesserung dient. Die Erntegutmenge bzw. daraus ermittelte Ertragsdaten basieren auf dem Gesamtdurchsatz der Erntemaschine. Da Erntemaschinen zur Erhöhung der Durchsatzmenge mit zunehmend breiter werdenden Vorsatzgeräten ausgestattet sind, deren Arbeitsbreite die Maschinenbreite um ein Mehrfaches übersteigt, ist die höchste zu erreichende Auflösung auf die jeweilige Arbeitsbreite beschränkt. Um höheren Anforderungen an durchzuführende Maßnahmen zur Ertragsverbesserung, beispielsweise an eine präzisere Düngung eines neu ausgesäten Bestands, auf Basis der erstellten Ertragskartierung gerecht zu werden, ist eine höhere Auflösung bei der Ertragskartierung notwendig, dem die zunehmende Arbeitsbreite der Vorsatzgeräte zur Erhöhung der Durchsatzmengen und die damit einhergehend abnehmende Auflösung und damit geringere Präzision bei der Ertragskartierung diametral gegenüberstehen.

Aufgabe der vorliegenden Erfindung ist es, ein Verfahren zur Ertragskartierung sowie ein System zur Kartierung eines Ertrags einer selbstfahrenden Erntemaschine bereitzustellen, welche eine verbesserte Ertragskartierung mit einer höheren Auflösung ermöglichen.

Diese Aufgabe wird aus verfahrenstechnischer Sicht ausgehend vom Oberbegriff des Anspruchs 1 in Verbindung mit dessen kennzeichnenden Merkmalen gelöst. Aus vorrichtungstechnischer Sicht erfolgt eine Lösung der Aufgabe durch die technischen Merkmale des nebengeordneten Anspruchs 12. Die hierauf jeweils folgenden, abhängigen Ansprüche geben jeweils vorteilhafte Weiterbildungen der Erfindung wieder.

Gemäß dem Anspruch 1 wird ein Verfahren zur Ertragskartierung vorgeschlagen, umfassend die Schritte
- Bestimmen einer von einer selbstfahrenden Erntemaschine aufgenommenen Erntegutmenge durch zumindest ein Messsystem;
- Bestimmen von Ertragsdaten anhand der bestimmten aufgenommenen Erntegutmenge;
- georeferenzierte Abspeicherung der Ertragsdaten in einer Speichervorrichtung; gekennzeichnet durch die folgenden Verfahrensschritte :
- vorausschauende sensorische Erfassung von Umfelddaten und sensorische Erfassung von zumindest einem Betriebsparameter der Erntemaschine;
- Verarbeitung der Umfelddaten zur Bestimmung von Erntegutbestandsparametern;
- georeferenzierte Abspeicherung zumindest der Erntegutbestandsparametern in der Speichervorrichtung; und
- Verrechnen der georeferenzierten Ertragsdaten mit den georeferenzierten Erntegutbestandsparametern bezogen auf zumindest eine durch die Erntemaschine während des Erntevorgangs zurückgelegte Trajektorie zur Erstellung einer Ertragskarte.

Unter dem Begriff georeferenziert wird das Einordnen von Daten in ein georäumliches Koordinatensystem durch Zuordnung von Koordinatenwerten verstanden. Hierzu kann ein Ausgangspunkt der Trajektorie vorgegeben werden, beispielsweise der Ort der Erstaufnahme von Erntegut auf einem kartografisch bereits erfassten Feld. Durch das Erfassen der Umfelddaten und des zumindest einen Betriebsparameters, wie Fahrgeschwindigkeit sowie Lenkbewegungen, der Erntemaschine lassen sich die jeweiligen Koordinatenwerte der Trajektorie bestimmen. Alternativ können der Ausgangspunkt und der Verlauf der Trajektorie mittels eines Positionsortungssystems bestimmt werden.

Erntegutbestandsparameter, die aus den vorausschauend erfassten Umfelddaten bestimmt werden, sind unter anderem Erntegutart, Bestandsdichte, Bestandshöhe sowie individuelle Eigenschaften des einzelnen Erntegutes wie die Dicke und/oder Länge eines Stängels oder Halmes sowie die Abmessungen des Fruchtstandes des Erntegutes. Des Weiteren werden durch externe Einflüsse verursachte Lücken im Bestand, beispielsweise aufgrund von Wildfraß oder Fahrgassen, aus den vorausschauend erfassten Umfelddaten bestimmt, um die daraus resultierenden niedrigeren Ertragswerte entsprechend interpretieren zu können.

Das Zusammenführen bzw. Fusionieren der georeferenzierten Ertragsdaten, und der georeferenzierten Erntegutbestandsparameter, die im Vorfeld der Erntemaschine durch vorausschauende Erfassung von Umfelddaten bestimmt wurden, ermöglicht eine präzisere Kartierung der Erträge auf einer bearbeiteten landwirtschaftlichen Fläche. Das Verrechnen der georeferenzierten Ertragsdaten mit den georeferenzierten Erntegutbestandsparametern bezogen auf zumindest eine durch die Erntemaschine während des Erntevorgangs zurückgelegte Trajektorie gibt den räumlichen Bezug vor. Die höhere Präzision der Ertragskartierung ist von Vorteil, da die vorgenommene Ertragskartierung die Basis für nach einer Ernte durchzuführende Bearbeitungsschritte ist, insbesondere für Bearbeitungsschritte zu einer Ertragssteigerung der Ernte im Folgejahr. Durch die höhere Präzision der Ertragskartierung können auch Maßnahmen, wie die Bekämpfung von Beiwuchs, besser abgestimmt werden. Ebenfalls kann auf Teilflächen des ertragskarierten Feldes geschlossen werden, auf weichen es beispielsweise aufgrund einer dort vorliegenden Bestandsdichte oder durch Witterungseinflüsse zum Lagern, d.h. Umknicken, des Erntegutes gekommen ist. Dieses sogenannte Lagergetreide kann anhand der vorausschauend erfassten Umfelddaten bestimmt und kartiert werden.

Das georeferenzierte Abspeichern der anhand der aufgenommenen Erntegutmenge bestimmten Ertragsdaten sowie der Erntegutbestandsparameter durch die Verarbeitung von Umfelddaten kann in zumindest einer lokalen Speichervorrichtung und/oder in einer räumlich zu der Erntemaschine beabstandeten Speichervorrichtung erfolgen.

Vorteilhaft ist es, wenn die vorausschauende sensorische Erfassung von Umfelddaten innerhalb von zumindest zwei in Fahrtrichtung der Erntemaschine gesehen nebeneinanderliegenden Abschnitten durchgeführt wird, deren Breite jeweils kleiner als die Arbeitsbreite der Erntemaschine ist. Die Arbeitsbreite wird von dem Vorsatzgerät bestimmt, welches für den Ernteprozess zur Aufnahme des Erntegutes zur Anwendung kommt. Für eine Steigerung des Erntegutdurchsatzes der Erntemaschine werden Vorsatzgeräte mit zunehmend größer werdenden Arbeitsbreiten verwendet. Das aus dem Stand der Technik bekannte Verfahren zur Ertragskartierung ist hinsichtlich der Auflösung bzw. Rasterung der bearbeiteten landwirtschaftlichen Fläche, die kartiert werden soll, auf die Arbeitsbreite der Erntemaschine beschränkt. Im Unterschied dazu wird durch die vorausschauende sensorische Erfassung von Umfelddaten innerhalb von zumindest zwei in Fahrtrichtung der Erntemaschine gesehen nebeneinanderliegenden Abschnitten bereits eine Verdopplung der Auflösung erreicht.

Insbesondere kann die Anzahl der nebeneinanderliegenden Abschnitte in Abhängigkeit von der Arbeitsbreite vorgegeben werden. Diese Vorgehensweise ist insbesondere bei Schneidewerken von Bedeutung, da diese nicht selten Arbeitsbreiten von 12 m und mehr aufweisen, jedoch die das Erntegut aufnehmende und be- oder verarbeitende Arbeitsmaschine nicht. Vielmehr wird der Erntegutstrom von dem Vorsatzgerät auf einen schmalen Bereich zusammengeführt, der die Breite der Erntemaschine unterschreitet. Die Unterteilung in eine von der Arbeitsbreite abhängige Anzahl von Abschnitten, die vorausschauend hinsichtlich der Umfelddaten sensorisch erfasst werden, ermöglicht in Verbindung mit den Ertragsdaten eine präzisere Zuordnung der Ertragsdaten zu einem jeweiligen Abschnitt der bearbeiteten landwirtschaftlichen Fläche.

Gemäß einer bevorzugten Ausführungsform kann der Ertrag durch ein Ertragsmesssystem bestimmt werden. Das Ertragsmesssystem kann unabhängig von einem Messsystem zur Bestimmung der aufgenommenen Erntegutmenge arbeiten.

Insbesondere kann durch das Ertragsmesssystem ein Teil der aufgenommenen Erntegutmenge als Ertrag oder die Gesamterntegutmenge als Ertrag bestimmt werden. Während beispielsweise bei einer als Mähdrescher ausgeführten Erntemaschine in der Regel nur ein Teil, insbesondere die Kornbestandteile im Erntegut, der aufgenommenen Erntegutmenge als Ertrag bestimmt wird, wird bei einer als Feldhäcksler ausgeführten Erntemaschine die gesamte Erntegutmenge als Ertrag bestimmt. Darüber hinaus können bei einer als Mähdrescher ausgeführten Erntemaschine auch der Strohertrag sowie der Spreuanteil als anteiliger Ertrag bestimmt werden.

Bevorzugt kann die von der Erntemaschine aufgenommene Erntegutmenge durch zumindest ein Messsystem auf Basis eines Massenstromes oder eines Volumenstromes bestimmt werden. Hierzu kann die Erntemaschine mit einem entsprechenden Messsystem ausgestattet sein. Bevorzugt ist die Verwendung eines Messsystems zur Bestimmung des Massenstromes, da auf diese Weise eine zusätzliche Umrechnung eines detektierten Volumenstromes in den Massenstrom entfallen kann. Hingegen sind Messsystem zur Volumenstrombestimmung oftmals einfacher umsetzbar.

Gemäß einer bevorzugten Weiterbildung kann zusätzlich eine in Fahrrichtung der Erntemaschine gesehen rückschauende sensorische Erfassung von Umfelddaten durchgeführt werden. Dabei werden Umfelddaten erfasst, die eine bearbeitete landwirtschaftliche Fläche unmittelbar nach dem Passieren durch die Erntemaschine aufweist. Dabei können beispielsweise Erntegutverluste detektiert werden. Weiterhin kann mittels der rückschauenden sensorischen Erfassung von Umfelddaten die Häcksel- und/oder Verteilqualität einer als Mähdrescher ausgeführten Erntemaschine bestimmt werden. Bei einer Schwadablage durch die Erntemaschine lassen sich Schwadposition sowie Schwadvolumen bzw. Schwaddichte erfassen und kartieren.

Insbesondere können als Umfelddaten zusätzlich Informationen erfasst und ausgewertet werden, die von dem aufzunehmenden Erntegut abweichen. So kann beispielsweise unerwünschter Beiwuchs identifiziert und entsprechend in der Ertragskarte hinterlegt werden. Weiterhin lassen sich anhand der erfassten Umfelddaten auch Bestandsgrenzen oder Hindernisse auf dem Feld bestimmen und georeferenziert abspeichern. Ebenso lassen sich anhand der Umfelddaten nasse Bereiche im Feld erkennen und entsprechend in der Ertragskarte georeferenziert hinterlegen. Diese Daten fließen dann zusätzlich in die durch Verrechnung erstellte Ertragskarte ein. Diese weiteren mit erhöhter Auflösung in der Ertragskarte kartierten Informationen können als Grundlage für Automatisierungslösungen, z.B. kooperativer Maschinenfunktion und Maschinenführung, dienen.

Weiterhin kann die Verrechnung der georeferenzierten Ertragsdaten zu den georeferenzierten Erntegutparametern zeitlich und räumlich synchronisiert werden. Auf diese Weise kann dem Umstand Rechnung getragen werden, dass von dem Vorsatzgerät aufgenommenes Erntegut, dessen vorausschauend erfassten Umfelddaten, aus denen die Erntegutbestandsparameter bestimmt werden, hierzu zeitlich und räumlich versetzt als Ertrag erfasst und bestimmt wird. In Kenntnis einer von der Erntemaschine zurückgelegten Fahrstrecke, die durch Auswertung des zumindest einen Betriebsparameters, wie der Fahrgeschwindigkeit, der zurückgelegten Wegstrecke oder dergleichen, bestimmbar ist, sowie der Dauer der Be- und Verarbeitung des Erntegutes bis zur Ertragsbestimmung, lassen sich die bestimmten Erntegutbestandsparameter mit den Ertragsdaten räumlich in Einklang bringen. Das von den der Erntemaschine aufgenommene Erntegut kann unter Berücksichtigung der Laufzeiten der einzelnen Erntegutströme innerhalb der Erntemaschine sowie zumindest der Fahrgeschwindigkeit bzw. der von der Fahrgeschwindigkeit abgeleiteten zurückgelegten Wegstrecke dem zugehörigen, hinter der Erntemaschine liegenden Abschnitt zugeordnet werden. Hierdurch kann eine weitere Erhöhung der Präzision der Ertragskartierung erreicht werden.

Bevorzugt können Prozesszeiten bei der Aufnahme und Verarbeitung des Erntegutes ermittelt werden. Hierdurch kann die Zuordnung zwischen den vorausschauend erfassten Umfelddaten des Erntegutes und den Ertragsdaten des zeitlich versetzt aufgenommen und verarbeiteten Erntegutes verbessert werden. Hierzu können insbesondere Betriebsparameter der das Erntegut fördernden und/oder verarbeitenden Arbeitsaggregate der Erntemaschine erfasst und ausgewertet werden. Derartige Betriebsparameter können beispielsweise Antriebsdrehzahlen der Arbeitsaggregate sein. Weiterhin können Betriebsparameter auch die Verteilung des Ernteguts über die Breite der Arbeitsaggregate sein.

Weiterhin können während der Be- oder Verarbeitung des Erntegutes durch Arbeitsaggregate der Erntemaschine Parameter durch Sensoren erfasst werden, die Ernteguteigenschaften betreffen. Zu derartigen Parametern können beispielsweise die Feuchtigkeit und /oder Inhaltsstoffe des Erntegutes zählen. Daneben sind auch Erntegutverluste als Parameter anzusehen, die durch einen Sensor erfasst werden. Diese Parameter des Erntegutes können gemeinsam mit den Ertragsdaten und den Erntegutbestandsdaten in der erfindungsgemäß erstellten Ertragskarte georeferenziert hinterlegt werden.

Des Weiteren kann innerhalb der zumindest zwei Abschnitte das Vorhandensein von Erntegut detektiert werden. Dadurch kann beispielsweise eine nur teilweise Auslastung eines der Aufnahme des Erntegutes dienenden Vorsatzgerätes an der Erntemaschine erfasst und bei der Ertragskartierung berücksichtigt werden. Eine nur teilweise Auslastung des Vorsatzgerätes kann vorliegen, wenn das Vorsatzgerät abschnittsweise neben einer Bestandskante geführt wird. Ebenso stellt sich eine nur teilweise Auslastung des Vorsatzgerätes ein, wenn Flächen ohne Bewuchs im abzuerntenden Feld vorhanden sind oder die Aufnahme von Erntegut aufgrund äußerer Bedingungen in einem Teilbereich des Feldes nicht möglich ist. D.h., Bereiche eines zu bearbeitenden Feldes, in denen das Vorsatzgerät über seine Arbeitsbreite gesehen abschnittsweise kein Erntegut aufnehmen kann, werden bei der Ertragskartierung entsprechend berücksichtigt.

Weiterhin wird die eingangs gestellte Aufgabe durch ein System zur Kartierung eines Ertrags einer selbstfahrenden Erntemaschine mit den Merkmalen des Anspruches 12 gelöst.

Gemäß dem Anspruch 12 wird ein System zur Kartierung eines Ertrags einer selbstfahrenden Erntemaschine vorgeschlagen, umfassend,
- zumindest ein Messsystem, das dazu eingerichtet ist, eine durch die Erntemaschine aufgenommene Erntegutmenge zu bestimmen;
- zumindest eine Recheneinheit, die dazu eingerichtet ist, durch Auswertung der bestimmten aufgenommenen Erntegutmenge Ertragsdaten zu bestimmen; und
- die Ertragsdaten in einer Speichervorrichtung georeferenziert abzuspeichern; wobei
- die Erntemaschine zumindest eine Sensoranordnung zur vorausschauenden Erfassung von Umfelddaten umfasst;
- die Erntemaschine zumindest eine Sensoranordnung zur Erfassung von zumindest einem Betriebsparameter der Erntemaschine umfasst;
- dass die Recheneinheit dazu eingerichtet ist, die Umfelddaten zur Bestimmung von Erntegutbestandsparametern zu verarbeiten;
- dass die Recheneinheit dazu eingerichtet ist, zumindest die Erntegutbestandsparameter georeferenziert in einer Speichervorrichtung abzuspeichern; und
- dass die Recheneinheit dazu eingerichtet ist, die georeferenzierten Ertragsdaten mit den georeferenzierten Erntegutbestandsparametern zur Erstellung einer Ertragskarte bezogen auf zumindest eine durch die Erntemaschine während des Erntevorgangs zurückgelegte Trajektorie zu verrechnen.

Die zumindest eine Recheneinheit und/oder die Speichervorrichtung können lokal auf der Erntemaschine als auch räumlich von dieser getrennt angeordnet sein. Die zumindest eine Recheneinheit ist dazu eingerichtet, die Verrechnung bzw. Fusionierung der georeferenzierten Ertragsdaten zu den georeferenzierten Erntegutparametern zeitlich und räumlich zu synchronisieren. Hierzu kann die Recheneinheit dazu eingerichtet sein, die Prozesszeiten bei der Aufnahme und Verarbeitung des Ernteguts zu ermitteln.

Dabei kann zur vorausschauenden Detektion des Umfeldes zumindest eine berührungslos arbeitende Sensoranordnung an der Erntemaschine angeordnet sein. Die zumindest eine berührungslos arbeitende Sensoranordnung kann auf einem bildgebenden Verfahren basierend arbeiten oder zur Erfassung von geometrischen Informationen eingerichtet sein. Die zumindest eine berührungslos arbeitende Sensoranordnung kann beispielsweise als Radar, Lidar, Ultraschallsensor und/oder Kamera, Stereokamera oder eine sonstige bildgebene Sensorik, wie z.B. eine Hyperspektralkamera, ausgeführt sein. Für eine in Fahrrichtung der Erntemaschine gesehen rückschauende sensorische Erfassung von Umfelddaten kann bevorzugt ebenfalls zumindest eine berührungslos arbeitende Sensoranordnung vorgesehen sein. Die zumindest eine Sensoranordnung zur vorausschauenden Detektion des Umfeldes kann an der Erntemaschine oder deren Vorsatzgerät angeordnet sein oder von einer Drohne mitgeführt werden, welche die erzeugten Daten an die Erntemaschine überträgt.

Bevorzugt kann das Messsystem zur Bestimmung eines Massenstromes, eines Volumenstromes oder zum Wiegen des Erntegutes eingerichtet sein. Die von dem Messsystem bereitgestellten Signale können von der Recheneinheit zur Bestimmung der Ertragsdaten ausgewertet werden. Dabei wird die Prozessdauer, d.h. die Zeit, die das hinsichtlich seiner Erntegutbestandsparameter vorausschauend erfasste Erntegut benötigt, um vom Zeitpunkt seiner Erfassung bis zur Bestimmung des Ertrags die Erntemaschine zu durchlaufen, berücksichtigt.

Ein weiterer vorteilhafter Aspekt ist, dass das System zur Übermittlung von georeferenzierten Ertragsdaten und georeferenzierten Erntegutbestandsparametern zur Erzeugung der Ertragskarte an ein externes Backend-System und/oder zur Übermittlung der auf der Erntemaschine generierten Ertragskarte an das externe Backend-System eingerichtet sein kann. Bevorzugt kann die auf der Erntemaschine während des Erntevorgangs erstellte Ertragskarte an das Backend-System übertragen werden, auf welchem diese unter anderem für weiterführende Aufgaben innerhalb eines Farmmanagementsystems verwendet wird, beispielsweise für eine Abrechnung mit einem Lohnunternehmen. Alternativ oder zusätzlich können die georeferenzierten Ertragsdaten und die georeferenzierten Erntegutbestandsparameter zur Erzeugung der Ertragskarte an das Backend-System übermittelt werden, wobei die Datenfusion auf dem Backend-System erfolgt.

Die vorliegende Erfindung wird nachstehend anhand eines in den Zeichnungen dargestellten Ausführungsbeispieles näher erläutert.

Es zeigen:
- Fig. 1: eine schematische Darstellung einer als Mähdrescher ausgeführten landwirtschaftlichen Erntemaschine;
- Fig. 2: eine schematische Darstellung eines durch die Erntemaschine zu bearbeitenden Feldes in einer Ansicht von oben;
- Fig. 3: eine schematische Darstellung einer Steuer- und Regelvorrichtung der Erntemaschine; und
- Fig. 4: ein vereinfachtes Flussdiagramm zur Veranschaulichung des Verfahrens zur Ertragskartierung.

Nachstehend werden ein Verfahren und ein System zur Kartierung des Ertrags einer Erntemaschine 1 beschrieben.

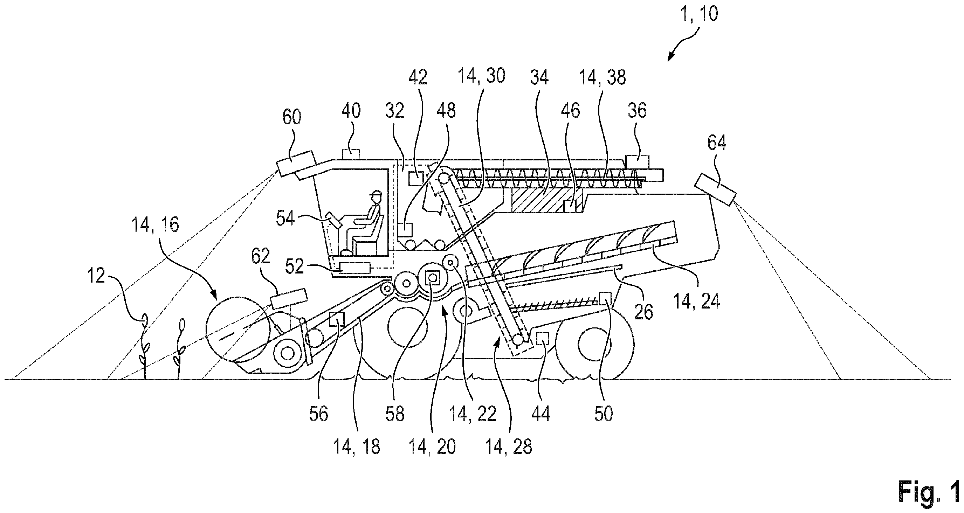

In Fig. 1 ist die landwirtschaftliche Erntemaschine 1 im Sinne der vorliegenden Erfindung dargestellt, bei der es sich um einen selbstfahrenden Mähdrescher 10 handelt. Es liegt im Rahmen der Erfindung, dass die landwirtschaftliche Erntemaschine 1 auch als ein Feldhäcksler ausgeführt sein kann.

Der Mähdrescher 10 weist zur Aufnahme und Bearbeitung von Erntegut 12 eine Vielzahl von Arbeitsaggregaten 14 auf. Zu den Arbeitsaggregaten 14 zählen bei dem hier dargestellten Mähdrescher 10 ein als Schneidwerk ausgeführtes Vorsatzgerät 16 zur Aufnahme von Erntegut 12 und ein Schrägförderer 18, an mit dem das Vorsatzgerät 16 verbunden ist, zum Weitertransport des Erntegutes 12 in den Mähdrescher 10. Von dem Schrägförderer 18 wird das Erntegut 12 als Erntegutstrom an eine als weiteres Arbeitsaggregat 14 ausgebildete Drescheinrichtung 20 des Mähdreschers 10 übergeben. Durch eine Umlenktrommel 22 gelangt der Erntegutstrom in eine als Trennrotor ausgebildete Trenneinrichtung 24 zum Abscheiden von freibeweglichen Körnern des Erntegutstromes in einen unteren Bereich des Mähdreschers 10. Von hier aus gelangt der Erntegutstrom über einen Rücklaufboden 26 zu einer Reinigungsvorrichtung 28, welche Siebböden und ein Gebläse zur Reinigung des Erntegutes umfasst. Die freibeweglichen Körner aus dem Erntegutstrom werden von einer Fördervorrichtung 30 zu einem Korntank 32 transportiert. Hierzu nimmt die Fördervorrichtung 30 das gereinigte Erntegut in einem tiefer gelegenen Schüttgutannahmebereich im Fußbereich der Fördervorrichtung 30 an und fördert es zu einem höher gelegenen Schüttgutabgabebereich im Kopfbereich der Fördervorrichtung 30. Der Mähdrescher 10 weist zudem einen Antriebsmotor 34 auf, der die zum Betrieb der Arbeitsaggregate 14 und zur Fortbewegung des Mähdreschers 10, beispielsweise mittels eines hydrostatischen Fahrantriebes (nicht dargestellt), benötigte Antriebsleistung bereitstellt. Die Arbeitsaggregate 14 und der Fahrantrieb des Mähdreschers 10 sind hierfür zur Energieübertragung mit dem Antriebsmotor 34 trieblich verbunden.

Weiterhin umfasst der Mähdrescher 10 eine Steuer- und Regelvorrichtung 52, welche mit einer Ein- und Ausgabeeinrichtung 54 im Inneren einer Kabine des Mähdreschers 10 signaltechnisch verbunden ist. Darüber hinaus ist die Steuer- und Regelvorrichtung 52 durch ein Bussystem mit mehreren an dem Mähdrescher 10 angeordneten Sensoren bzw. Sensoranordnungen 40, 44, 46, 48, 50, 56, 58, 60, 62, 64 verbunden, die der Bestimmung von Betriebs- und Erntegutparametern sowie von Umfelddaten dienen. Bei den an bzw. in dem Mähdrescher 10 verbauten Sensoranordnungen kann es sich unter anderem um einen Positionsortungssensor 40, einen Feuchtesensor 44 zur Bestimmung des Feuchtegehalts des, insbesondere gereinigten, Erntegutes 12, zumindest einen Drehzahlsensor 46 zur Überwachung der Antriebsdrehzahl des Antriebsmotors 34, einen Kornverlustsensor 50, einen im Schrägförderer 18 angeordneten Schichthöhensensor 56 zur Bestimmung einer Erntegutmenge sowie zumindest einen Drehzahlsensor 58 zur Überwachung der Antriebsdrehzahl zumindest einer Trommel der Drescheinrichtung 20, handeln. Weiterhin kann zumindest eine berührungslos arbeitende Sensoranordnung als Umfelddetektionseinrichtung 60, 62 am Kabinendach und /oder an dem Vorsatzgerät 16 angeordnet sein. Zusätzlich kann eine berührungslos arbeitende Umfelddetektionseinrichtung 64 im Heckbereich des Mähdreschers 10 angeordnet sein. Die zumindest eine berührungslos arbeitende Umfelddetektionseinrichtung 60, 62, 64 kann beispielsweise als Lidar-Sensor, Radar-Sensor, Ultraschallsensor und/oder als Kamera, Stereokamera, Hyperspektralkamera oder dergleichen ausgeführt sein und dient der Bestimmung der Umfelddaten.

Die Anordnung zusätzlicher Sensoren, die weitere Betriebs- oder Erntegutparameter erfassen, durch welche insbesondere der Durchsatz sowie die Verweildauer des aufgenommenen Erntegutes 12 in der Erntemaschine 1 bestimmt werden können, ist denkbar. Mit den Bezugszeichen 42 und 48 ist beispielhaft ein Messsystem bezeichnet, welches der Erfassung eines Erntegutertrags dienen. Dabei kann das im Kopfbereich der Fördervorrichtung 30 angeordnete Messsystem 42 zur Bestimmung eines Massenstromes oder eines Volumenstromes eingerichtet sein, dessen Bestimmung in Verbindung mit der detektierten Feuchtigkeit des Ernteguts 12 durchgeführt wird. Alternativ kann das Messsystem 48 zum Wiegen des von dem Korntank 32 aufgenommenen Erntegutes eingerichtet sein. Ein weiteres Messsystem kann dazu eingerichtet sein, den Erntegutertrag anhand des Füllgrades im Korntank 32 bestimmen.

Weiterhin kann entlang des Gutstromverlaufs durch die Erntemaschine 1 zumindest ein Sensor 36 angeordnet sein, welcher der Detektion von Ernteguteigenschaften dient, insbesondere der Detektion der Inhaltsstoffe, der aber auch der Detektion von Feuchtigkeit und/oder der Erntegutqualität dienen kann. Hierbei kann es sich beispielsweise um einen NIR-Sensor (Nahinfrarot-Sensor) handeln. Beispielhaft ist der NIR-Sensor 36 am Auslaufrohr 38 der Fördervorrichtung 30 angeordnet.

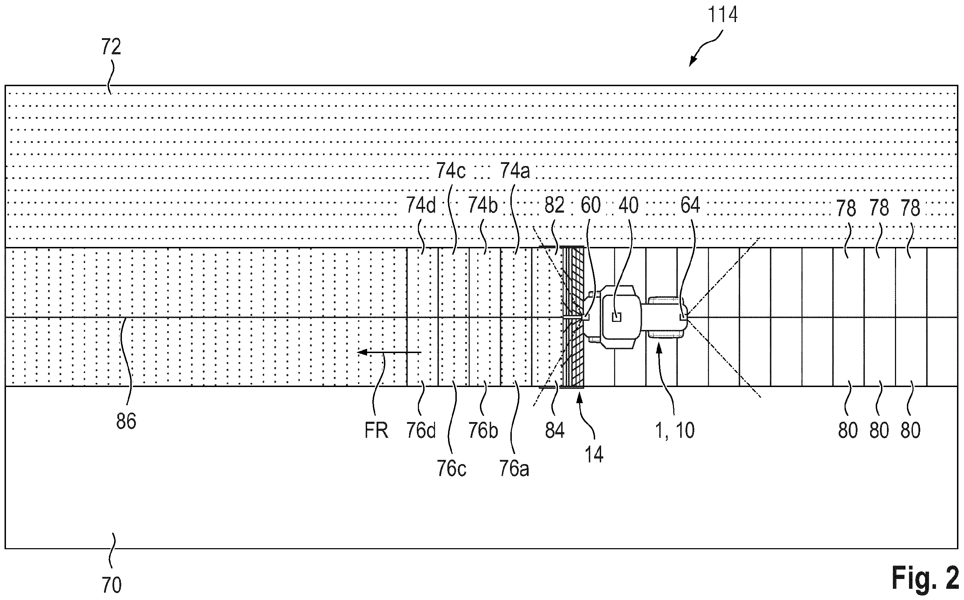

Die Fig. 2 zeigt eine schematische Darstellung eines durch die Erntemaschine zu bearbeitenden Feldes 114 in einer Ansicht von oben. Ein Teilbereich 70 ist bereits durch den Mähdrescher 10 abgeerntet worden. Ein Teilbereich 72, der punktiert dargestellt ist, weist abzuerntendes Erntegut 12 auf. Der Mähdrescher 10 bewegt sich in Fahrtrichtung FR entlang einer Trajektorie 86 über das Feld 114. Der exemplarisch dargestellte geradlinige Verlauf der Trajektorie 86 ist lediglich beispielhaft zu verstehen. Die Abmessungen des Vorsatzgerätes 16 geben die Arbeitsbreite der Erntemaschine 1 vor, d.h. der Breite eines Feldabschnittes, über den Erntegut 12 von dem Vorsatzgerät 16 aufgenommen wird.

Die beispielhaft an der Kabinenvorderkante angeordnete zumindest eine Umfelddetektionseinrichtung 60 erfasst in Fahrtrichtung FR gesehen vorausschauend das Umfeld. Dabei wird die vorausschauende sensorische Erfassung von Umfelddaten innerhalb von zumindest zwei in Fahrtrichtung FR der Erntemaschine 1 gesehen nebeneinanderliegenden Abschnitten 74a, 76a, 74b, 76b, 74c, 76c, 74d, 76d durchgeführt, deren Breite jeweils kleiner als die Arbeitsbreite der Erntemaschine 1 ist. Die Darstellung von jeweils nur zwei nebeneinanderliegenden Abschnitten 74a, 76a, 74b, 76b, 74c, 76c, 74d, 76d dient in erster Linie der Veranschaulichung. Eine höhere Anzahl von nebeneinanderliegenden Abschnitten ist für eine detailliertere Erfassung sinnvoll. Für jeden einzelnen Abschnitt 74a, 76a, 74b, 76b, 74c, 76c, 74d, 76d erfolgt die Erfassung von Umfelddaten sequentiell. Die beispielhafte Darstellung in Fig. 2 zeigt die zumindest zwei nebeneinanderliegenden Abschnitte 74a, 76a, 74b, 76b, 74c, 76c, 74d, 76d mit einer Gesamtbreite, die der Arbeitsbreite entspricht. Grundsätzlich kann die von der Umfelddetektionseinrichtung 60 erfassbare Gesamtbreite der zumindest zwei nebeneinanderliegenden Abschnitte 74a, 76a, 74b, 76b, 74c, 76c, 74d, 76d größer als die Arbeitsbreite der Erntemaschine 1 sein. Hierdurch lassen sich z.B. Bestandskanten besser erfassen. Die zumindest eine Umfelddetektionseinrichtung 60 kann beispielsweise auch an dem des Vorsatzgerätes 16 angeordnet sein, wobei die Umfelddetektionseinrichtung 60 von einer Halterung aufgenommen werden kann, durch welche die Umfelddetektionseinrichtung 60 in einem Abstand zur Vorderkante der des Vorsatzgerätes 16 gehalten ist, um vorausschauend Umfelddaten erfassen zu können. Eine weitere Möglichkeit der vorausschauenden Erfassung von Umfelddaten könnte darin bestehen, dass zumindest eine Umfelddetektionseinrichtung 60 an einer Drohne angeordnet ist, welche der Erntemaschine 1 vorauseilend Umfelddaten entlang der abzufahrenden Trajektorie erfasst.

Im rückwärtigen Bereich der Erntemaschine 1 sind jeweils nebeneinanderliegende Abschnitte 78, 80 dargestellt, welche bereits abgeerntet wurden. Die an Rückseite der Erntemaschine 1 angeordnete Umfelddetektionseinrichtung 64 erfasst das Arbeitsergebnis innerhalb der nebeneinanderliegenden Abschnitte 78, 80. Die Anzahl und Breite der nebeneinanderliegenden Abschnitte 78, 80 hinter der Erntemaschine 1 entspricht der Anzahl und Breite der nebeneinanderliegenden Abschnitte 74a, 76a, 74b, 76b, 74c, 76c, 74d, 76d vor der Erntemaschine 1. Bei dem Arbeitsergebnis kann es sich um die Ablage von Stroh auf dem Feldboden des Feldes 114 handeln oder die Ausbringung von gehäckseltem Stroh und Spreu durch eine Häcksel- und Verteilvorrichtung der Erntemaschine 1. Des Weiteren kann als ein Arbeitsergebnis die Stoppelhöhe und/oder Verlustkorn innerhalb der jeweiligen nebeneinanderliegenden Abschnitte 78, 80 erfasst werden. Ebenfalls kann als ein Arbeitsergebnis bei einer Ablage von Stroh als Schwad auf dem Feld dessen spezifischen Eigenschaften, wie Form, Höhe, Breite und genaue Lage erfasst werden.

Die Umfelddetektionseinrichtung 60 erfasst in Fahrtrichtung FR gesehen vorausschauend auch den Bereich innerhalb des Vorsatzgerätes 16, welcher der Erntegutaufnahme und der Erntegutförderung in Richtung des Schrägförderers 18 dient. Auch dieser Bereich wird in eine der Anzahl und Dimensionierung der nebeneinanderliegenden Abschnitte 74a, 76a entsprechende Anzahl und Dimensionierung von Teilabschnitten 82, 84 unterteilt.

Der Begriff Umfelddaten umfasst Signale über das aufzunehmende Erntegut 12, welche mittels der Umfelddetektionseinrichtung 60 erfassbar sind. Zu den Umfelddaten zählen Signale, aus denen unter anderem auf Erntegutart, Bestandsdichte, Bestandshöhe, Fremdkörper auf dem Feldboden, Beiwuchs sowie individuelle Eigenschaften des einzelnen Erntegutes wie die Dicke und/oder Länge eines Stängels oder Halmes sowie die Abmessungen des Fruchtstandes des Erntegutes 12 rückgeschlossen werden kann. Weiterhin werden mittels der Umfelddetektionseinrichtung 60 Stellen erfasst, an denen es zum Lagern, d.h. Umknicken, des Erntegutes 12 gekommen ist.

Die in einem jeweiligen Abschnitt 74a, 76a vorausschauend erfassten Umfelddaten werden georeferenziert abgespeichert. Unter dem Begriff georeferenziert wird das Einordnen von Daten in ein georäumliches Koordinatensystem durch Zuordnung von Koordinatenwerten verstanden. Hierzu kann ein Ausgangspunkt der Trajektorie 86 vorgegeben werden, beispielsweise der Ort der Erstaufnahme von Erntegut 12 auf dem kartografisch bereits erfassten Feld 114. Durch das Erfassen der Umfelddaten und der jeweiligen Fahrgeschwindigkeit sowie etwaiger Lenkbewegungen als jeweils ein Betriebsparameter der Erntemaschine lassen sich die Koordinatenwerte der Trajektorie 86 bestimmen. Alternativ können der Ausgangspunkt und der Verlauf der Trajektorie 86 mittels der von einem Positionsortungssystem durch den Positionssensor 40 erfassten Signale bestimmt werden.

Die Umfelddetektionseinrichtung 60 erfasst des Weiteren die Teilabschnitte 82, 84 des Vorsatzgerätes 16, um den Gutfluss des aufgenommenen Erntegutes im Vorsatzgerät 16 zu bestimmen. Erntegut 12, welches in den äußeren Randbereichen des Vorsatzgerätes 16 aufgenommen wird, weist eine größere Verweildauer im Vorsatzgerät 16 auf, als Erntegut 12, dass im mittleren Bereich des Vorsatzgerätes 16 aufgenommen wird. Wie bereits weiter oben ausgeführt, erfolgt in der Erntemaschine 1 eine Ertragsbestimmung. Während sich bei einer als Mähdrescher 10 ausgeführten Erntemaschine 1 der Ertrag am Anteil des aus dem aufgenommenen Erntegut 12 abgeschiedenen Korns festmacht, wird bei einer als Feldhäcksler ausgeführten Erntemaschine 1 die gesamte aufgenommene Erntegutmenge als Ertrag bestimmt. Der mittels des zumindest einen Messsystems 42, 48 der Erntemaschine 1 bestimmte Ertrag wird ebenfalls georeferenziert abgespeichert. Zusätzlich können Erntegutparameter, die beispielsweise mittels der Sensoren 44, 50, 56 der Erntemaschine 1 bestimmt werden, georeferenziert abgespeichert werden.

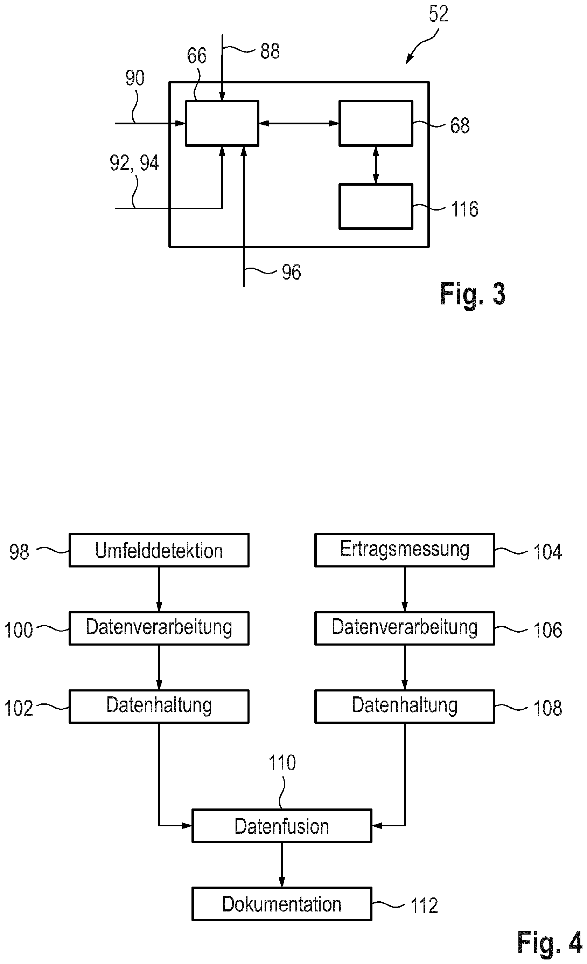

Fig. 3 zeigt schematisch eine Darstellung der Steuer- und Regelvorrichtung 52 der Erntemaschine 1. Die Steuer- und Regelvorrichtung 52 kann neben der Ansteuerung der Arbeitsaggregate 14 auch dazu eingerichtet sein, die von den Sensoren 40, 44, 46, 48, 50, 56, 58, 60, 62, 64 und Messsystemen 42, 48 erfassten Signale auszuwerten und zu verarbeiten. Es ist jedoch auch denkbar, nur für die Auswertung und Verarbeitung der Signale der Sensoren 40, 44, 46, 48, 50, 56, 58, 60, 62, 64 und der Messsystemen 42, 48 eine unabhängige Steuer- und Regelvorrichtung vorzusehen, die an das Bussystem der Erntemaschine 1 angeschlossen ist.

Die Steuer- und Regelvorrichtung 52 umfasst zumindest eine Recheneinheit 66, eine Speichervorrichtung 68 sowie eine Sende-Empfangseinheit 116. Durch das Bussystem werden an die Steuer- und Regelvorrichtung 52 jeweils Positionssignale 88, Umfelddatensignale 90, Betriebs- und Erntegutparametersignale 92, 94 sowie Signale 96 des zumindest einen Messsystems 42, 48 zur Auswertung übermittelt. Die jeweiligen anhand der Signale 90, 92, 94, 96 bestimmten Daten werden in der Speichervorrichtung 68 georeferenziert abgespeichert. Die Steuer- und Regelvorrichtung 52 ist dazu eingerichtet, die Verweildauer des zu verarbeitenden Erntegutes 12 in der Erntemaschine 1 anhand der sensorisch erfassten Betriebsparametern zu bestimmen. Auf diese Weise kann ein räumlicher und zeitlicher Zusammenhang zwischen dem in Abschnitt 74a, 76a aufgenommenen Erntegut 12, welches beispielsweise erst mit dem Erreichen des Abschnittes 74c, 76c von der Erntemaschine 1 verarbeitet wurde, und dem daraus bestimmten Ertrag hergestellt werden.

In Fig. 4 ist ein vereinfachtes Flussdiagramm zur Veranschaulichung des Verfahrens zur Ertragskartierung durch das System dargestellt. Im Schritt 98 wird die vorausschauende Umfelddetektion durchgeführt. Die im Zuge der Umfelddetektion sensorisch ermittelten Umfelddaten werden im Schritt 100 durch die Recheneinheit 66 verarbeitet. Aus den Signalen der Umfelddaten werden im Schritt 100 Erntegutbestandsparametern bestimmt. Die Erntegutbestandsparameter, die aus den vorausschauend erfassen Umfelddaten bestimmt werden, sind unter anderem Erntegutart, Bestandsdichte, Bestandshöhe sowie individuelle Eigenschaften des einzelnen Erntegutes 12, wie die Dicke und/oder Länge eines Stängels oder Halmes sowie die Abmessungen des Fruchtstandes des Erntegutes 12. Im nachfolgenden Schritt 102 erfolgt die Datenhaltung, während der die Erntegutbestandsparameter in einer gerasterten Karte georeferenziert hinterlegt werden. Die Rasterung der Karte korrespondiert dabei mit der Anzahl der nebeneinanderliegenden Abschnitte 74a, 76a, 74b, 76b, 74c, 76c, 74d, 76d, die von der zumindest einen Umfelddetektionseinrichtung 60 vorausschauend erfasst werden. D.h., mit zunehmender Anzahl von nebeneinanderliegenden Abschnitten wird die Auflösung der Karte, in welcher die Erntegutbestandsparameter georeferenziert hinterlegt werden, erhöht.

Im Schritt 104 werden durch das zumindest eine Messsystem 42, 48 Messungen, beispielsweise die Messung eines Volumenstromes oder eines Massenstromes, zur Bestimmung der aufgenommenen Erntegutmenge durchgeführt. Im Schritt 106 werden die Signale der Messungen im Zuge der Datenverarbeitung ausgewertet, um aus der aufgenommenen Erntegutmenge Ertragsdaten zu bestimmen. Dabei können die Ertragsdaten auf einen Teil der aufgenommenen Erntegutmenge beschränkt sein, beispielsweise nur das Korn, oder die gesamte aufgenommene Erntegutmenge umfassen, Korn und Nichtkornbestandteile. Im nachfolgenden Schritt 108 werden die Ertragsdaten im Zuge der Datenhaltung georeferenziert abgespeichert.

Im Schritt 110 werden die in den Schritten 102 und 108 georeferenzierten Ertragsdaten mit den georeferenzierten Erntegutbestandsparametern bezogen auf zumindest eine durch die Erntemaschine 1 während des Erntevorgangs zurückgelegte Trajektorie 86 zur Erstellung einer Ertragskarte verrechnet. Dabei werden im Schritt 110 die Umfelddaten und Betriebsparameter berücksichtigt, welche die Laufzeit der Erntegutströme durch das Vorsatzgerät 16 und die Erntemaschine 1 beschreiben. Auf diese Weise lassen sich die Erntegutbestandsparameter und die Ertragsdaten zeitlich und räumlich synchronisieren. So lässt sich bezogen auf einen fixen Zeitpunkt, in welchem die Umfelddaten vorausschauend erfasst wurden, einem der zur Erntemaschine 1 beabstandeten Abschnitte 74a, 76a, 74b, 76b, 74c, 76c, 74d, 76d zuordnen. Die Ertragsdaten können bedingt durch den Be- und Verarbeitungsprozess durch die Arbeitsaggregate 14 der Erntemaschine 1 nur zeitlich verzögert ermittelt werden. Somit können die Ertragsdaten nur einem hinter der Erntemaschine 1 befindlichen Abschnitt 78, 80 zugeordnet werden. Die Berücksichtigung der Laufzeit der Erntegutströme ermöglicht im Schritt 110 diese Zuordnung von Erntegutbestandsparameter und Ertragsdaten zu synchronisieren.

Im Schritt 112 erfolgt die Dokumentation, das heißt das Erstellen einer Ertragskarte oder das Aktualisieren einer bereits bestehenden Ertragskarte. Dabei wird durch die Datenfusion im Schritt 110 sowie die Unterteilung des vorausschauend zu detektierenden Bereiches in innerhalb von zumindest zwei in Fahrtrichtung der Erntemaschine 1 gesehen nebeneinanderliegende Abschnitte 74a, 76a, 74b, 76b, 74c, 76c, 74d, 76d, deren Breite jeweils kleiner als die Arbeitsbreite der Erntemaschine 1 ist, eine deutlich höhere Auflösung bei der Ertragskartierung erreicht.

Im Schritt 112 können auch die weiter oben bereits genannten Betriebsparameter und Erntegutparameter in der zu erstellenden Ertragskarte georeferenziert hinterlegt werden. Im Anschluss an den Schritt 112 kann die Ertragskarte mittels der Sende-Empfangseinheit 116 an ein externes Backend-System, wie ein Farmmanagementsystem, übermittelt werden.

**Bezugszeichenliste**

| | | | |
|---|---|---|---|
| 1 | Erntemaschine | 68 | Speichervorrichtung |
| 10 | Mähdrescher | 70 | Teilbereich von 114 |
| 12 | Erntegut | 72 | Teilbereich von 114 |
| 14 | Arbeitsaggregat | 74a-d | Abschnitt |
| 16 | Vorsatzgerät | 76a-d | Abschnitt |
| 18 | Schrägförderer | 78 | Abschnitt |
| 20 | Drescheinrichtung | 80 | Abschnitt |
| 22 | Umlenktrommel | 82 | Teilabschnitt |
| 24 | Trenneinrichtung | 84 | Teilabschnitt |
| 26 | Rücklaufboden | 86 | Trajektorie |
| 28 | Reinigungsvorrichtung | 88 | Positionssignal |
| 30 | Fördervorrichtung | 90 | Umfelddatensignale |
| 32 | Korntank | 92 | Betriebsparametersignal |
| 34 | Antriebsmotor | 94 | Erntegutparametersignale |
| 36 | NIR-Sensor | 96 | Signale |
| 38 | Auslaufrohr | 98 | Schritt |
| 40 | Positionssensor | 100 | Schritt |
| 42 | Messsystem | 102 | Schritt |
| 44 | Feuchtesensor | 104 | Schritt |
| 46 | Drehzahlsensor | 106 | Schritt |
| 48 | Messsystem | 108 | Schritt |
| 50 | Kornverlustsensor | 110 | Schritt |
| 52 | Steuer- und Regelvorrichtung | 112 | Schritt |
| 54 | Ein- und Ausgabeeinrichtung | 114 | Feld |
| 56 | Schichthöhensensor | 116 | Sende-Empfangseinheit |
| 58 | Drehzahlsensor | | |
| 60 | Umfelddetektionseinrichtung | FR | Fahrtrichtung |
| 62 | Umfelddetektionseinrichtung | | |
| 64 | Umfelddetektionseinrichtung | | |
| 66 | Recheneinheit | | |

## Patentansprüche

1. Verfahren zur Ertragskartierung, umfassend die Schritte
- Bestimmen einer von einer selbstfahrenden Erntemaschine (1, 10) aufgenommenen Erntegutmenge durch zumindest ein Messsystem (42, 48);
- Bestimmen von Ertragsdaten anhand der bestimmen aufgenommenen Erntegutmenge;
- georeferenzierte Abspeicherung der Ertragsdaten in einer Speichervorrichtung (68);
**gekennzeichnet durch die folgenden Verfahrensschritte:**
- vorausschauende sensorische Erfassung von Umfelddaten und sensorische Erfassung von zumindest einem Betriebsparameter der Erntemaschine (1, 10);
- Verarbeitung der Umfelddaten zur Bestimmung von Erntegutbestandsparametern;
- georeferenzierte Abspeicherung zumindest der Erntegutbestandsparametern in der Speichervorrichtung (68); und
- Verrechnen der georeferenzierten Ertragsdaten mit den georeferenzierten Erntegutbestandsparametern bezogen auf zumindest eine durch die Erntemaschine (1, 10) während des Erntevorgangs zurückgelegte Trajektorie (86) zur Erstellung einer Ertragskarte.

2. Verfahren nach Anspruch 1, **dadurch gekennzeichnet, dass** die vorausschauende sensorische Erfassung von Umfelddaten innerhalb von zumindest zwei in Fahrtrichtung (FR) der Erntemaschine (1, 10) gesehen nebeneinanderliegenden Abschnitten (74a, 76a; 74a, 76b; 74c, 76c; 74d, 76d, 82, 84) durchgeführt wird, deren Breite jeweils kleiner als die Arbeitsbreite der Erntemaschine (1, 10) ist.

3. Verfahren nach Anspruch 2, **dadurch gekennzeichnet, dass** die Anzahl der nebeneinanderliegenden Abschnitte(74a, 76a; 74a, 76b; 74c, 76c; 74d, 76d; 82, 84) in Abhängigkeit von der Arbeitsbreite vorgegeben wird.

4. Verfahren nach einem der Ansprüche 1 bis 3, **dadurch gekennzeichnet, dass** der Ertrag durch ein Ertragsmesssystem (42, 48) bestimmt wird.

5. Verfahren nach Anspruch 4, **dadurch gekennzeichnet, dass** durch das Ertragsmesssystem (42,48) ein Teil der aufgenommenen Erntegutmenge als Ertrag oder die Gesamterntegutmenge als Ertrag bestimmt wird.

6. Verfahren nach einem der vorangehenden Ansprüche, **dadurch gekennzeichnet, dass** zusätzlich eine in Fahrrichtung (FR) der Erntemaschine (1, 10) gesehen rückschauende sensorische Erfassung von Umfelddaten durchgeführt wird.

7. Verfahren nach einem der vorangehenden Ansprüche, **dadurch gekennzeichnet, dass** als Umfelddaten zusätzlich Informationen erfasst und ausgewertet werden, die von dem aufzunehmenden Erntegut (12) abweichen.

8. Verfahren nach einem der vorangehenden Ansprüche, **dadurch gekennzeichnet, dass** die Verrechnung der georeferenzierten Ertragsdaten zu den georeferenzierten Erntegutparametern zeitlich und räumlich synchronisiert wird.

9. Verfahren nach einem der vorangehenden Ansprüche, **dadurch gekennzeichnet, dass** Prozesszeiten bei der Aufnahme und Verarbeitung des Ernteguts (12) ermittelt werden.

10. Verfahren nach einem der vorangehenden Ansprüche, **dadurch gekennzeichnet, dass** während der Be- oder Verarbeitung des Erntegutes (12) durch Arbeitsaggregate (14) der Erntemaschine (1, 10) Parameter durch Sensoren (40, 44, 46, 56, 58) erfasst werden.

11. Verfahren nach einem der vorangehenden Ansprüche, **dadurch gekennzeichnet, dass** innerhalb der zumindest zwei Abschnitte (74a, 76a; 74a, 76b; 74c, 76c; 74d, 76d, 82, 84) das Vorhandensein von Erntegut (12) detektiert wird.

12. System zur Kartierung des Ertrags einer selbstfahrende Erntemaschine (1, 10), umfassend,
- zumindest ein Messsystem (42, 48), das dazu eingerichtet ist, eine durch die Erntemaschine (1, 10) aufgenommene Erntegutmenge zu bestimmen;
- zumindest eine Recheneinheit (66), die dazu eingerichtet ist, durch Auswertung der bestimmten aufgenommenen Erntegutmenge Ertragsdaten zu bestimmen; und
- die Ertragsdaten in einer Speichervorrichtung (68) georeferenziert abzuspeichern;
**dadurch gekennzeichnet, dass**
- die Erntemaschine (1, 10) zumindest eine Sensoranordnung (60, 62) zur vorausschauenden Erfassung von Umfelddaten umfasst;
- die Erntemaschine (1, 10) zumindest einen Sensor (40, 44, 46, 56, 58) zur Erfassung von zumindest einem Betriebsparameter der Erntemaschine umfasst;
- dass die Recheneinheit (66) dazu eingerichtet ist, die Umfelddaten zur Bestimmung von Erntegutbestandsparametern zu verarbeiten;
- dass die Recheneinheit (66) dazu eingerichtet ist, zumindest die Erntegutbestandsparameter georeferenziert in der Speichervorrichtung (68) abzuspeichern; und
- dass die Recheneinheit (66) dazu eingerichtet ist, die georeferenzierten Ertragsdaten mit den georeferenzierten Erntegutbestandsparametern zur Erstellung einer Ertragskarte bezogen auf zumindest eine durch die Erntemaschine (1, 10) während des Erntevorgangs zurückgelegte Trajektorie (86) zu verrechnen.

13. System nach Anspruch 12, **dadurch gekennzeichnet, dass** zur vorausschauenden Detektion des Umfeldes zumindest eine berührungslos arbeitende Sensoranordnung (60, 62) an der Erntemaschine (1, 10) angeordnet ist.

14. System nach Anspruch 12 oder 13, **dadurch gekennzeichnet, dass** das Messsystem (42, 48) zur Bestimmung eines Massenstromes, eines Volumenstromes oder zum Wiegen des Erntegutes (12) eingerichtet ist.

15. System nach einem der Ansprüche 12 bis 14, **dadurch gekennzeichnet, dass** die Erntemaschine (1, 10) zur Übermittlung von georeferenzierten Ertragsdaten und georeferenzierten Erntegutbestandsparametern zur Erzeugung der Ertragskarte an ein externes Backend-System und/oder der auf der Erntemaschine generierten Ertragskarte an das externe Backend-System eingerichtet ist.
